# EUROPEAN PATENT SPECIFICATION

(11) **EP 3 432 998 B1**
(45) Date of publication and mention of the grant of the patent: **18.01.2023**
(21) Application number: 16895305.7
(22) Date of filing: 23.03.2016
(51) Int. Cl.: B01D 3/00, B01D 19/00, B01D 19/02

(54) **GAS FOAMING MONITORING DEVICE**
ÜBERWACHUNGSVORRICHTUNG FÜR GASSCHÄUMUNG
DISPOSITIF DE SURVEILLANCE DE MOUSSAGE DE GAZ

(43) Date of publication of application: 30.01.2019
(73) Proprietor: Khalifa University of Science and Technologie, Abu Dhabi (AE); Abu Dhabi National Oil Company (ADNOC), Abu Dhabi (AE)
(72) Inventor: BANAT, Fawzi, Abu Dhabi (AE); ALHSEINAT, Emad, Abu Dhabi (AE)
(74) Representative: Bardehle Pagenberg Partnerschaft mbB Patentanwälte Rechtsanwälte
(86) International application number: PCT/IB2016/051639
(87) International publication number: WO 2017/163107

(56) References cited:
- EP-A2- 0 252 738
- CN-A- 102 914 494
- DE-A1- 4 106 011
- JP-A- S5 372 775
- US-A- 3 404 063
- US-A- 3 977 972
- US-A- 6 080 320
- US-A1- 2003 205 534

## Description

The present invention relates to an apparatus for monitoring foaming, in particular an apparatus having a foam riser column and a foam collecting column, wherein upper ends of the foam riser column and the foam collecting column are in fluid communication via a conduit, as well as to a method using such an apparatus for monitoring foaming. The present invention relates in particular to apparatus and methods for online monitoring of foam behavior and identification of foam creators in any liquid solvents that may come in contact with a gas stream and be prone to foam, especially solvents used to process hydrocarbons such as natural gas.

More specifically, an apparatus and method for online foaming monitoring and foaming creators' identification is provided. Continuous foam height and stability monitoring is provided through foam level indicator made e.g. of glass. Foam creators can be concentrated in the collected foam. Identification of foam creators would be possible through analyzing the collected foam. Process gas can be continuously injected into the process solvent in the bottom of the riser to continuously test the foamability of the process solvent. Any change of solvent foamability can also be reordered.

### Background

There are several processes where it is needed to have liquid stream to counter contact gas stream i.e. gas sweeting contactors. All these processes are prone for foaming. Any circumstances i.e. solvent degradation or contaminates present that can change the surface properties of the liquid stream would cause conditions to create foam.

In natural gas sweetening unit (GSU) foaming problem can be caused by several chemical contaminants including fine particulate, condensed liquid hydrocarbon, heat stable salts (HSS) and amine degradation products. These contaminates can be accumulated in the gas sweetening unit due to the closed loop nature of the amine process and may led to solvent foaming. Foaming problem increases operating costs, solvent losses, and premature flooding. This ultimately leads to reduced mass transfer area and thus mass transfer efficiency, also a high solvent carryover to downstream plants and eventually leads to reduction in plant throughput and off-spec products. Identification of foam creators before they reach their effective concentration (the concentration that will be sufficient to change the foaming behavior of the solvent) is essential to prevent foaming and facilitate the required actions that needed to be taken.

Currently there is no process or method for online monitoring and identifications of the foam creators before it accumulate further and reach its effective concentrations to cause foaming in the main unit contactors. The current operating practices deal with the foaming problems as incidents and just focus on reducing its immediate impact on the process. Indeed, the focus should be on the development of apparatus that can be installed in the unit to identify foaming sources and thus the correct action can be made to eliminate them before they cause the problem in the main contactors. In most gas plants, continuous antifoam injection is the most common practice to restrain foaming; however antifoam injection should be used as a last solution due to its negative impact on reducing the absorption capacity of the acid gases. Antifoam injection just suppresses the foam and has no effect on the presence of foam creators in the solution; and this aggravate the problem of foaming once the balance between the antifoam and foam creators is broken. The current disclosure presents apparatus and methods for online monitoring of foam behavior and identification of foam creators in any liquid solvents that may come in contact with gas stream and foam i.e. solvents used to process hydrocarbons such as natural gas; it is in fact a crucial step to mitigate and reduce the effect of the foaming problem.

US. Pat. No. 6,080,320 and U.S Pat. No. 2003/0205534 A1 present a method and apparatus for removing foaming contaminates from solvents using the concept of foam fractionation. The proposed apparatus in US. Pat. No. 6,080,320 and U.S Pat. No. 2003/0205534 A1 should be designed and manufactured to clean all circulated lean amine or a significant portion of it in order to be effective. The size of the apparatus would be large to accommodate the solvent and the foam. It would require close monitoring and an operator to be placed for its operation. The lost solvent that will out with the foam would be of significant amount. Nothing is mentioned in US. Pat. No. 6,080,320 and U.S Pat. No. 2003/0205534 A1 about monitoring of solvent foaming behavior and no methodology is proposed about the identification of foam creators. We present a new designed apparatus and method for online monitoring of foam behavior and identification of foam creators in any liquid solvents that may come in contact with gas stream and form foam based on the scientific concept of foam fractionation. Our apparatus is much smaller in size than the proposed apparatus on US. Pat. No. 6,080,320 and U.S Pat. No. 2003/0205534 A1 and can be easier installed in running unit for daily operation and monitoring.

### Summary of the invention

It is an object of the present invention to provide a method and apparatus for improving the industrial practice and decision making toward the dealing with the problem of undesired foaming in liquid counter current gas contactors.

It is another object of the present invention to provide a new method and apparatus that can be installed in running units for online monitoring of foam behavior and identification of foam creators.

It is another object of the present invention to provide a new method and apparatus that can be used for complete analysis of the foaming problem in any liquid solvents that may come in contact with gas stream and cause foam i.e. solvents used to process hydrocarbons such as natural gas.

It is another object of the present invention to provide a new method and apparatus that can be used for measuring foamability of liquids as well as stability and drainage of liquid foams. Also it should advantageously simultaneously measure the liquid content in foams at different height positions in the raiser. Also it should advantageously provide optical measurement of the foam structure.

These objects are achieved by the apparatus and the method according to the independent claims appended hereto. Other features and examples are set out in the dependent claims.

In order to achieve one or more of the mentioned objects, examples of the present disclosure provide an apparatus (1) for monitoring foaming having a foam riser column (2) and a foam collecting column (3), wherein upper ends of the foam riser column (2) and the foam collecting column (3) are in fluid communication via a conduit (4), which conduit (4) has a U-shape, wherein the foam riser column (2) has a solvent inlet (6) and further has a gas inlet (7) which is arranged below the solvent inlet (6) and is connected to a gas diffuser (11), and wherein a transparent level indicator (5) is provided at least along the foam riser column (2). In case the foam riser column (2) is made from a transparent material, it also forms the transparent level indicator (5). In case the foam riser column (2) is made from an untransparent material, the transparent level indicator (5) is made from a transparent material like plastic or preferably glass. Transparent means transparent for light in the visible region, especially in the range between 400 and 800 nm wavelength. Provided at least along the foam riser column (2) means that the transparent level indicator (5) allows to monitor the height of any foam formed in the foam riser column (2) from the lower end of the foam riser column (2), which is located below the gas inlet (7), and up to the upper end of the foam riser column (2) where it is in fluid communication with the conduit (4). In case the foam riser column (2) has the shape of a cylinder, which is preferred, the transparent level indicator (5) is provided in the lateral surface of the cylinder.

In the apparatus described herein, the level indicator (5) is preferably provided along the foam riser column (2), the foam collecting column (3) and the conduit (4) and/or is made of glass. In case the level indicator (5) is provided along the foam riser column (2), the foam collecting column (3) and the conduit (4) which are all made from a transparent material, this transparent material also forms the transparent level indicator (5). In case the foam riser column (2), the foam collecting column (3) and the conduit (4) are at least partially made from an untransparent material, the transparent level indicator (5) is made from a transparent material like plastic or preferably glass. Transparent means transparent for light in the visible region, especially in the range between 400 and 800 nm wavelength. Provided at least along the foam riser column (2), the foam collecting column (3) and the conduit (4) means that the transparent level indicator (5) allows to monitor the height of any foam formed in the foam riser column (2), in the foam collecting column (3) and in the conduit (4) from the lower end of the foam riser column (2), which is located below the gas inlet (7), through the conduit (4) and up to the lower end of the foam collecting column (3). In case the foam riser column (2), the foam collecting column (3) and the conduit (4) have a cylindrical shape (apart from the connecting parts between the foam riser column (2) and the conduit (4) and between the foam collecting column (3) and the conduit (4), respectively) which is preferred, the transparent level indicator (5) is provided in the lateral surface of the cylindrical shape, i.e. in the lateral surfaces of the respective cylinders. It is further particularly preferred for the apparatus that a scale is arranged on or lateral to the level indicator (5).

The foam riser column (2) has at least one side foam sampling point (21) arranged above the solvent inlet (6), or two, three or four foam sampling point, and especially preferred five side foam samplings point (21, 22, 23, 24, 25) arranged above the solvent inlet (6).

It is also preferred that a line (17) is connected to the conduit (4) and leads to the gas inlet (7). The foam riser column (2) and the foam collecting column (3) have a different height, wherein the height of the foam riser column (2) is higher that the height of the foam collecting column (3).

In the present apparatus there will be no lost solvent, the amount of contaminated solvent in foamate is small and it will be used for laboratory analysis for the identification purposes of foam creators. In an example of the current disclosure the transparent foam level indicator, which is preferably made of glass, is installed in the foaming column for allowing online visual monitoring of the foam height and breaking time. The proposed apparatus is designed for measuring foamability of liquids as well as stability and drainage of liquid foams. It can be provided with suitable foam height and liquid content sensors to simultaneously measure the liquid content in foam at different height positions in the raiser. Also it can be provided with camera for optical measurement of foam structure.

In order to achieve one or more of the mentioned objects, examples of the present disclosure provide a method of monitoring foaming using the apparatus of claim 1, comprising the following steps:
feeding a process solvent to the foam riser column (2) via the solvent inlet (6),
feeding a process gas to the foam riser column (2) via the gas inlet (7) and the gas diffuser (11), and
monitoring the height of any formed foam via the level indicator (5).

### Brief description of the drawings

The present invention will be described with reference to the accompanying drawings of which:
Fig. 1 is a schematic diagram of a preferred foaming propensity monitoring and diagnosing device according to the present invention, i.e. of a preferred apparatus (1) for monitoring foaming according to the present invention.
Fig. 2 shows a DSA ToF MS analysis for main solution sample, foamate sample and liquid sample obtained from industrial lean amine.
Fig. 3 shows a DSA ToF MS analysis for main solution sample, foamate sample and liquid sample obtained from first foaming treatment round of industrial lean amine.
Fig. 4 shows a DSA ToF MS analysis for main solution sample, foamate sample and liquid sample obtained from second foaming treatment round of industrial lean amine.
Fig. 5 shows a DSA ToF MS analysis for main solution sample, foamate sample and liquid sample obtained from third foaming treatment round of industrial lean amine.
Fig. 6 shows a DSA ToF MS analysis for initial main solution sample and remaining liquid sample obtained from multifoaming treatment of industrial lean amine.
Fig. 7 shows LC ToF MS spectra for M/z 106 (DEA), 117, 163 and 203 in main solution, remaining liquid, and foamate (see Figs. 7(a) to 7(d), respectively).

### Detailed description of the invention

The examples of the present disclosure are used for online measuring foamability of liquids as well as stability and drainage of liquid foams. Also it is used for identification of foam creators before they accumulate further in the unit and cause the problem of foaming in the main columns. The examples of the present disclosure are proposed to facilitate the decision making toward dealing with the problem of foaming before it upset the main units.

Examples of units where liquid solvents come in contact with gas stream and prone to foam include dehydration units and gas sweetening units. The examples of the present disclosure can also be used on solvents that are used to process hydrocarbon liquids.

Methyldiethanolamine and alkanolamine solutions in general are used in gas sweetening process to strip acid gases, specifically carbon dioxide and hydrogen sulfide. Alkanolamine solutions are characterized by their high selectivity to absorb these acid gases. The acid gases are considered as corrosive agents; the existence of acid gases with liquid water in the process vessels and pipes threatens their structures from corrosion. The acid gases should be removed and kept below a design specification of 4-20 ppm H₂S and <3% CO₂.

Foaming during gas sweetening is one of the most serious operational problems. Foaming can be induced by various contaminants including liquid hydrocarbon. Indeed, foaming generally leads to serious consequences such as loss of absorption capacity and reduced mass transfer area and efficiency and carryover of amine solution to the downstream plant. Foamed alkanolamines may carry large amounts of hydrocarbons which contribute to hydrocarbons losses, which is far in excess of what would be expected from solubility alone.

The examples of the present disclosure can be installed in the lean amine cycle and provide instantaneous information about the foam behavior of the solvent. Using the examples of the present disclosure foam creators can be identified before they reach their foaming effective concentration and upset the units. Installing the examples of the current disclosure in the amine unit is important to take the accurate measurements and reduce the effect of foaming. The best place to install the online foam monitoring apparatus 1 depends in the unit design and configuration, each unit should be dealt with separately; more than one apparatus can be installed at different point in the process.

A preferred online foam monitoring apparatus **1** has a foam riser column **2**, a foam collecting column **3** and a conduit **4** to connect the upper ends of the two columns **2, 3,** a glass level indicator **5** along the foam riser column **2**, the foam collecting column **3** and the conduit **4**.

In the preferred online foam monitoring apparatus **1,** the foam riser column **2** has a solvent inlet 6 that is withdrawn as a side stream from the process solvent i.e. the lean amine stream in amine gas sweetening unit, a gas inlet **7** that is withdrawn as a side stream from the process gas i.e. natural gas stream in amine gas sweetening unit, a solvent outlet **8** to be returned to the main solvent stream in the unit, a reflux foamate stream **9**, the reflux foamate is controlled using control valve **10** to enhance the foam creators concentration in the foamate for identification purposes. The foam riser column **2** has five side foam sampling points **21**, **22**, **23**, **24**, **25**.

It is preferred that the liquid pool in the bottom of the foam riser column **2** has a gas diffuser **11** connected to the gas inlet **6**, the diffuser type and design is chosen based in the type of main unit contactor to mimic the foaming behaviour inside the main contactors.

It is further preferred that a glass level indicator **5** is installed along the foam riser column **2**, the foam collecting column **3** and the conduit **4** to allow the unit operator to monitor and record the foam height and breaking time. Valve **12** in the solvent inlet **6** and valve **13** in the gas inlet **7** must be closed to record the foam breaking time.

It is also preferred that a drain line **14** is arranged at the bottom of the foam collecting column **3.** A pump **15** discharges concentrate foamate from the drain line **14** and recirculates concentrate foamate to a spray head **16** and to reflux foamate stream **9**. The vented gas **17** is recycled back to the gas inlet **7** to break the foam. Valve **18** and valve **19** can be used along with valve **12** and valve **13** to isolate the apparatus.

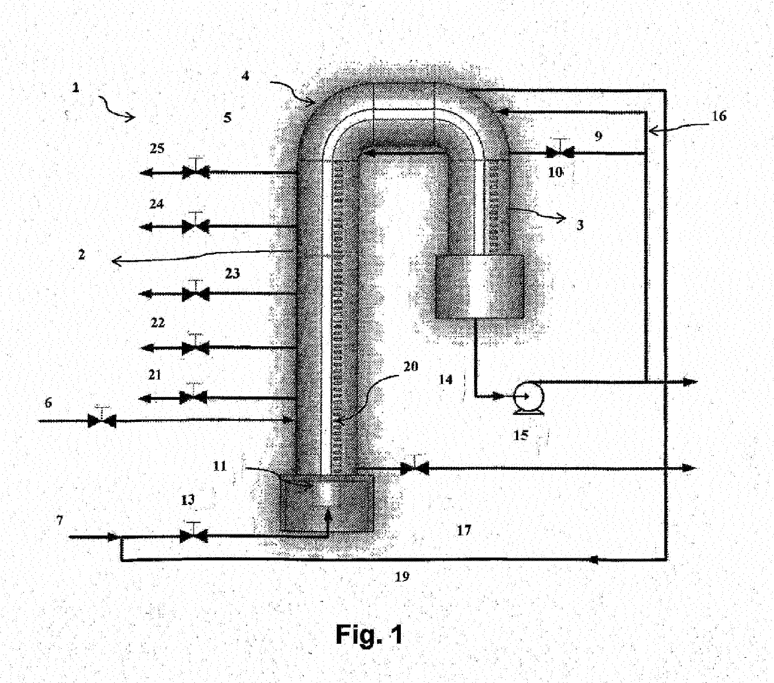

The operation of the apparatus **1** is described with respect to **Fig 1**. A side stream of process solvent is withdrawn and fed to the foam riser column **2** via solvent inlet **6**. The liquid level **20** in the foam riser column **2** is maintained constant. A process gas is introduced to the bottom of the foam riser column **2** via gas inlet **7** and the gas diffuser **11**. The diffuser type and design is chosen based on the type of main unit contactor to mimic the foaming behaviour inside the main contactors. Gas bubbles are formed in the solvent pool at the bottom of the foam riser column **2**. The generated foam height is monitored via the glass level indicator **5**; the foam breaking time can be recorded once valve **12** in the solvent inlet **6** and valve **13** in the gas inlet **7** are closed. Foam samples can be withdrawn along the apparatus height from sampling points **21**, **22**, **23**, **24**, **25** foam riser column **2**. The withdrawn foam samples with the collected foamate are sent to the laboratory for identification of the foam creators and any other contaminates that adsorbed in the foam bubbles. The unit operator will keep monitoring and recording the foam height. Any noticed change in the normal foam height will indicate a change in the foam behaviour of the process solvent. The results from the collected foam samples should be analysed by the process engineer and then prober measurements can be taken before the foam occur in the main unit contactors.

### Methodology of Foam Creators Identification

A DSA ToF MS (AxION 2 ToF MS, Perkin Elmer) instrument can for example be used to analyze the collected foam sample and to identify foam creators in lean amine samples. DSA which is integrated with a (TOF- MS), is one of the most recent and development ambient ionization techniques; these techniques enable the investigation of variety sample types across the molecular weight range. Accurate peak intensity recorded across the complete mass range, mass (m)/charge (z), by AxION 2 ToF MS (PerkinElmer) instrument; it records all the ions and all the time, which is particularly important for quantitative measurements to identify all contaminant sources in the sample. Small quantities of collected foam sample without any dilution or further treatment submitted via disposable mesh to DSA; (10 µL of sample), then rapid screening of samples is obtained. The obtained full spectrum measurement captures the complete composition of every tested sample. These spectra are used to identify the foam creators collected in the tested samples. We used the DSA LC ToF MS for the identification of foam creators from MDEA lean samples, the results are shown in the Figures of this application.

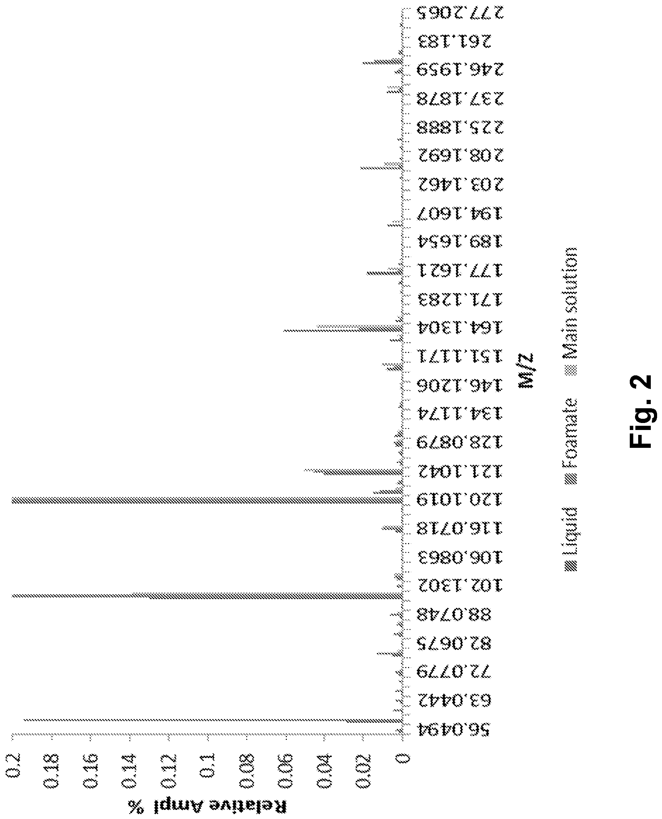

**Figure 2** shows the DSA ToF MS analysis results for main solution sample, foamate sample and liquid sample obtained from foaming treatment of lean amine sample collected from industrial gas sweetening unit. The absolute amplitude for MDEA, mass (m)/charge (z) (m/z) 120.1002 was the highest amplitude in all analyzed samples; the ratio between absolute amplitude for each peak to highest peak (MDEA) is the relative amplitude % values that is shown in all DSA ToF MS figures below.

As can be seen from **Fig. 2** there are some compounds (m/z) i.e. Glycolate, m/z: 76.0861, dimethylacetamide, m/z: 88.07, Dimethylethyleneamine(DMEEA), m/z: 84 show peaks with higher relative amplitude % in foamate than in main solution and remaining liquid. This indicates that these compounds of higher peaks in the foamate are concentrated in the collected foamate. Meanwhile, some compounds i.e. Dimethyl ethanolamine (DMEA), m/z: 102.090, Methyltriethanolamine (MTEA), m/z: 164.1304, Tris (hydroxyethyl)ethylenediamine (THEED), m/z:193.153, and Methanamine,N,N-di(2-trimethylsilyloxyethyl), m/z: 264.2285 show contiguous relative amplitude in the main solution, foamate and remaining liquid. These compounds either have no surface activity, thus, they have not been attached to the foam or they may need further time to be attached to the foam.

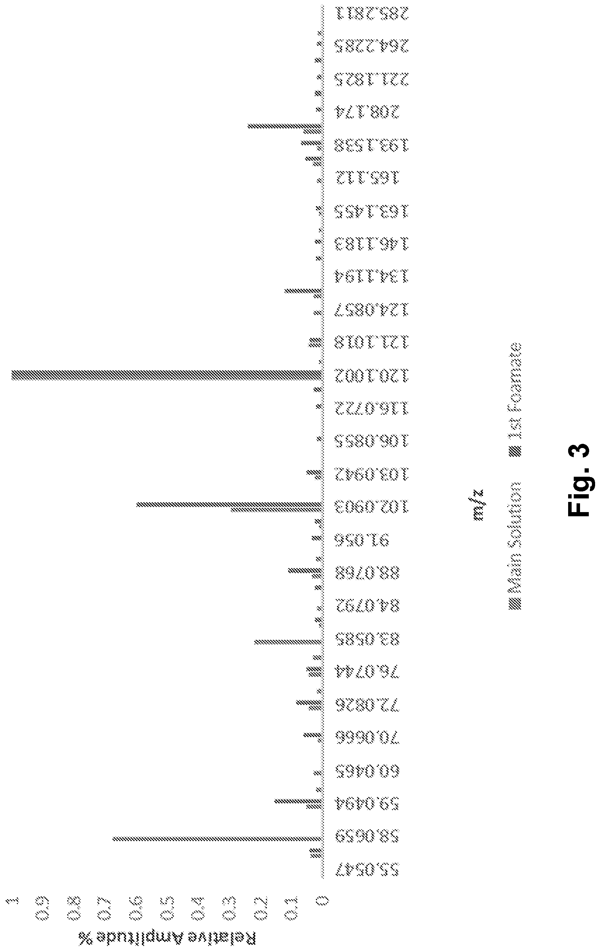

**Figures 3-6** show multifoaming treatment for real industrial lean amine sample.

**Figure 3** shows the relative amplitudes values of all compounds (m/z) that were detected from the first foaming round. It can be seen that there are peaks for some compounds (m/z) have higher relative amplitude % in foamate sample than in main solution sample; this indicates that this compounds (m/z) i.e. acetate, m/z: 59.0494, dimethylacetamide, m/z: 88.07, Dimethylethanolamine, m/z: 102.0903, Diethanolamine, m/z:106.0855 (DEA), Tris(hydroxyethyl)ethylene diamine (THEED), m/z: 193.1538, unknown compound m/z 203 and Methanamine,N,N-di(2-trimethylsilyloxyethyl), m/z: 264.2285 are partly separated with the first foamate sample.

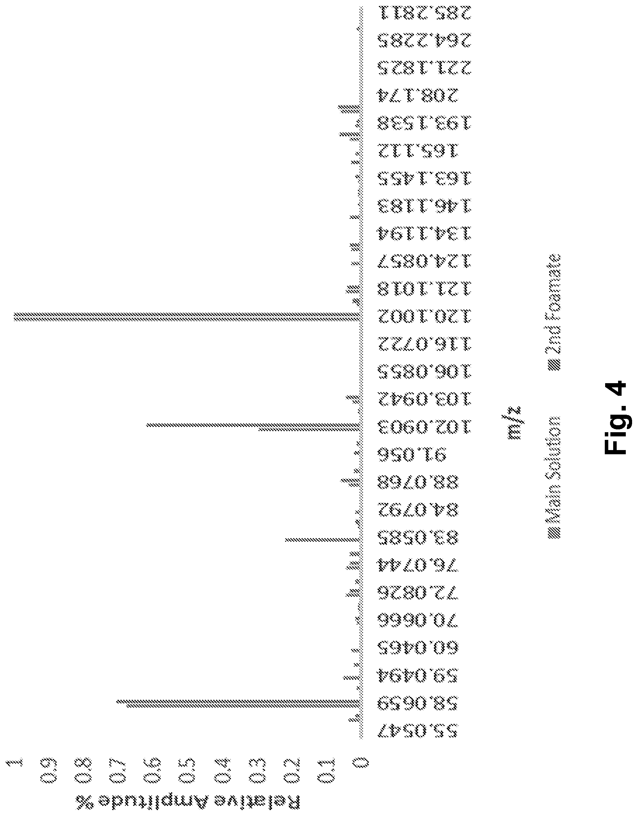

**Figure 4** shows the relative amplitudes values of all compounds (m/z) that were detected from the second foaming round. It can be seen from **Fig.4** that the detected relative amplitude for the above mentioned compounds that were detected in the first foaming round decreased in the main solution and increased in the foamate sample, this indicates that further separation of these compounds is accruing.

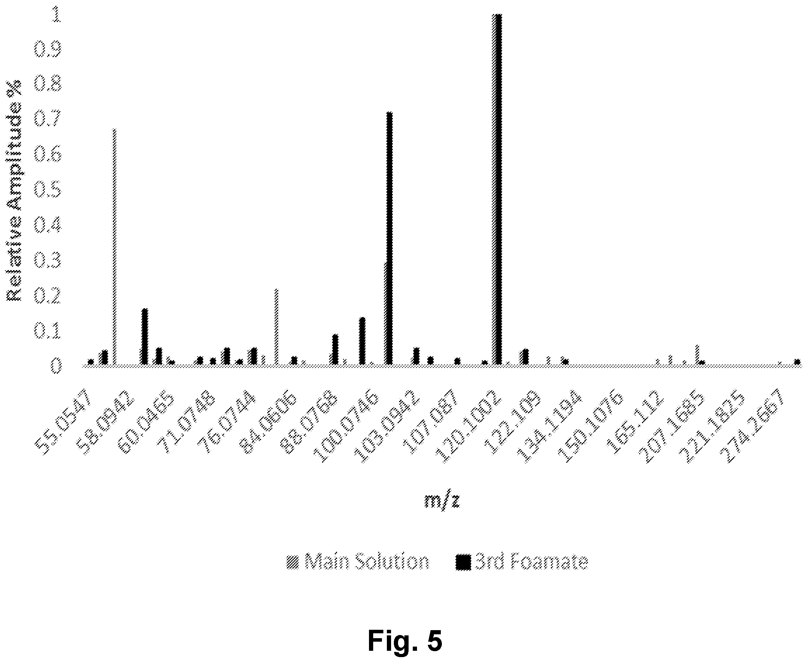

**Figure 5** shows the relative amplitudes values of all compounds (m/z) that were detected from the third foaming round. It can be seen from **Fig.5** that the detected relative amplitude for all of the detected compounds in the first sample decreased in the main solution and increased in the foamate sample. It can be noticed that (THEED), m/z: 193.1538 has not been detected in the third foaming round which indicates total removal of this compound in the first two rounds.

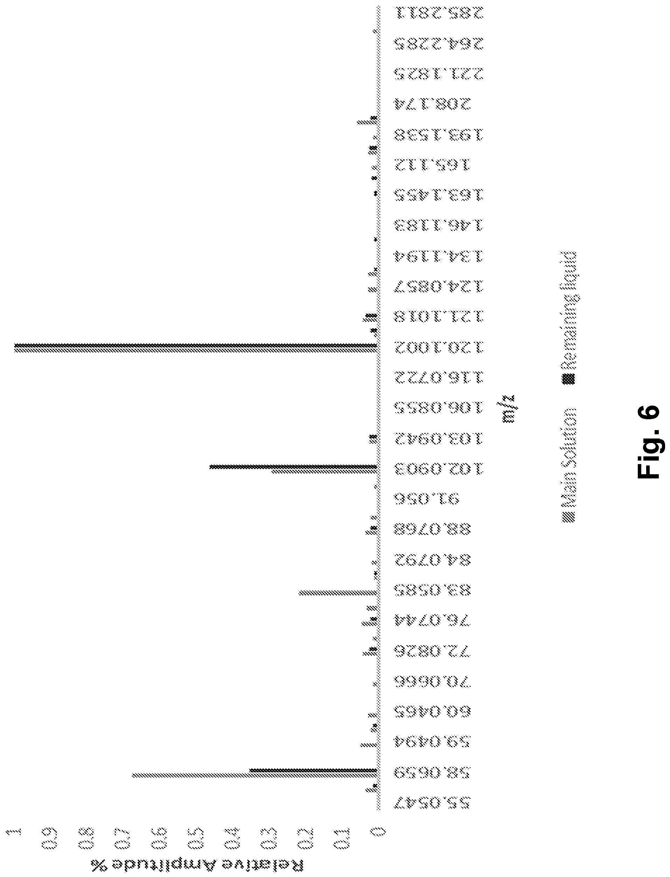

**Figure 6** shows a comparison between the relative amplitudes values of all compounds (m/z) that were detected in the main lean amine solution (before foaming treatment) and the remaining liquid (remaining lean amine) in the foam column after the foam treatment. It can be seen that almost all degradation products and other contaminates have lower relative amplitudes values in the remaining liquid than the initial relative amplitudes values in the main solution. This provides clear evidence that the concentrations of these compounds are decreased due to the foaming treatment. The foaming treatment facilitates the removal and identification of the foaming creators in real industrial lean amine.

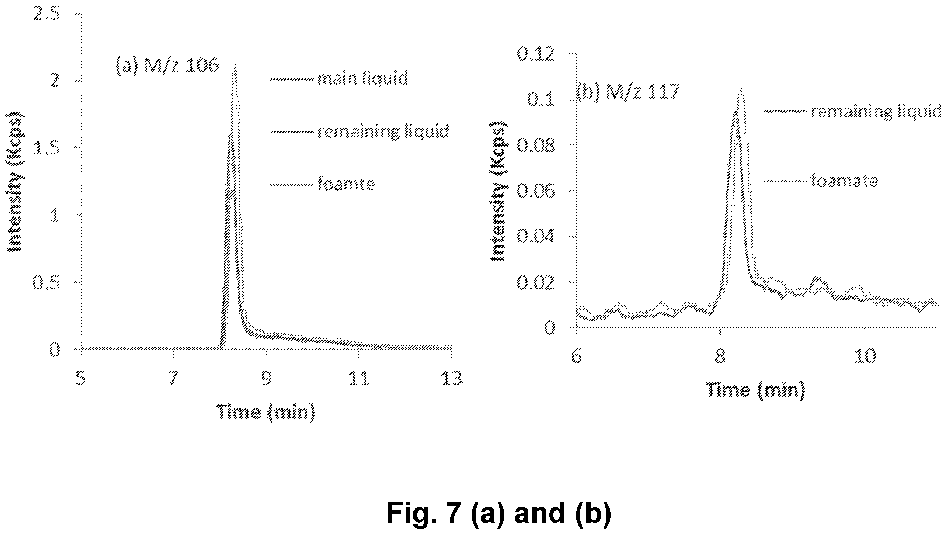

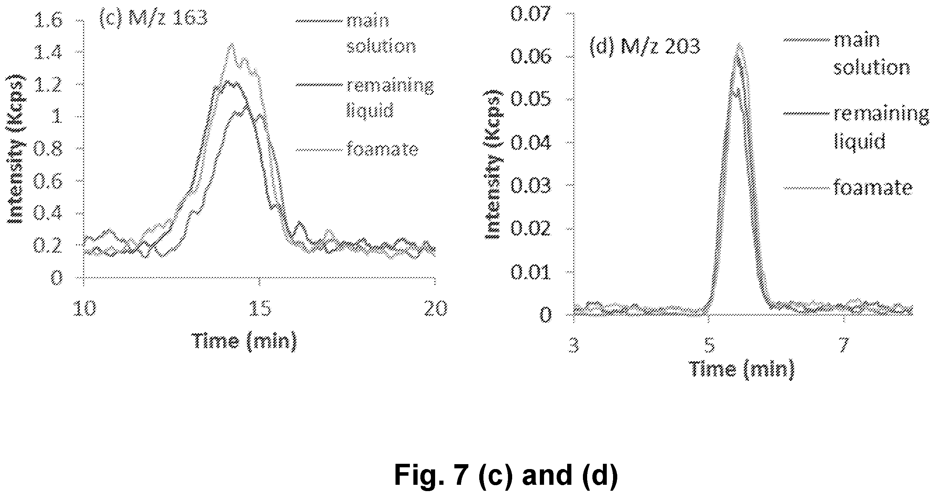

For further assuring of the capability of the foaming treatment, Liquid chromatography mass spectrometry (LC MS ToF) was used to identify some of the foam creators that could be separated in the LC column by comparing the difference in beak area in the foamate and remaining liquid for specific compound. 5 µL from foamate, liquid or main solution sample were added to 1500 µL of water (particular water supplied to LC ToF MS Instrument), then 10 µL of this diluted sample introduced to the LC ToF MS. As can be seen in **Fig. 7 (a)** m/z 106 (DEA) has been concentrated in the foamate. The DEA beak area in the foamate is higher than the beak area of DEA in the remaining liquid. **Fig. 7** **(b,c, and d)** show that the compounds of m/z 117,163, and 203 have higher area in the foamate than in the remaining liquid, this gives clear evidence that these compounds were separated with the collected foam.

After diagnosing increase in foaming potential and identifying the foaming source; the objective should be to minimize the level of the identified foaming creators in the amine solution. Identifying the source of foaming will facilitate the preventive action that should be taking to prevent foam occurrence in the main unit contactors i.e. Absorber and Stripper. For example in amine gas sweetening unit; if liquid hydrocarbons are identified as the source of foaming, the following action can be taken: the gas inlet separator should be monitored to insure that it is operating efficiently and not being overloaded. The temperature difference between the lean amine and feed gas should be fixed to be around 5 °C to decrease hydrocarbons condensation. A portion of the circulated lean amine should be directed to the carbon filter for removing the access hydrocarbons and minimize its concentration.

By doing these specific measurements the foam level in the online foaming monitoring apparatus (present disclosure) should return to the normal level which indicates a decrease in foaming creators concentration to ineffective level and a safe operation is then achieved. The use of antifoam will be limited for temporary situation where a sudden increase in foam creators is happened and a period of time will be required for identification and taken action.

## Claims

1. Apparatus (1) for monitoring foaming having a foam riser column (2) and a foam collecting column (3), wherein upper ends of the foam riser column (2) and the foam collecting column (3) are in fluid communication via a conduit (4), wherein the foam riser column (2) has a solvent inlet (6) and a gas inlet (7) which is arranged below the solvent inlet (6) and is connected to a gas diffuser (11), wherein a transparent level indicator (5) is provided at least along the foam riser column (2), and wherein the conduit (4) has a U-shape,
**characterized in that**
the foam riser column (2) has at least one side foam sampling point (21) arranged above the solvent inlet, and
the foam riser column (2) and the foam collecting column (3) have a different height, wherein the height of the foam riser column (2) is higher than the height of the foam collecting column (3).

2. The apparatus (1) according to claim 1 wherein the level indicator (5) is provided along the foam riser column (2), the foam collecting column (3) and the conduit (4).

3. The apparatus (1) according to any preceding claim, wherein the level indicator (5) is made of glass.

4. The apparatus (1) according to any preceding claim, wherein a scale is arranged on or lateral to the level indicator (5).

5. The apparatus (1) according to any preceding claim, wherein the foam riser column (2) has five side foam samplings point (21, 22, 23, 24, 25) arranged above the solvent inlet (6).

6. The apparatus (1) according to any preceding claim, wherein a line (17) is connected to the conduit (4) and leads to the gas inlet (7).

7. Method of monitoring foaming using the apparatus of claim 1 comprising the steps:
feeding a process solvent to the foam riser column (2) via the solvent inlet (6), feeding a process gas to the foam riser column (2) via the gas inlet (7) and the gas diffuser (1 1), and
monitoring the height of any formed foam via the level indicator (5).

## Patentansprüche

1. Vorrichtung (1) zur Überwachung einer Schaumbildung mit einer Schaumsteigsäule (2) und einer Schaumsammelsäule (3), wobei obere Enden der Schaumsteigsäule (2) und der Schaumsammelsäule (3) über eine Leitung (4) in Fluidverbindung stehen, wobei die Schaumsteigsäule (2) einen Lösungsmitteleinlass (6) und einen Gaseinlass (7) aufweist, der unterhalb des Lösungsmitteleinlasses (6) angeordnet und mit einem Gasdiffusor (11) verbunden ist, wobei zumindest entlang der Schaumsteigsäule (2) eine transparente Füllstandsanzeige (5) vorgesehen ist, und wobei die Leitung (4) eine U-Form aufweist,
**dadurch gekennzeichnet, dass**
die Schaumsteigsäule (2) zumindest einen seitlichen Schaumprobenahmepunkt (21) aufweist, der oberhalb des Lösungsmitteleinlasses angeordnet ist, und
die Schaumsteigsäule (2) und die Schaumsammelsäule (3) eine unterschiedliche Höhe aufweisen, wobei die Höhe der Schaumsteigsäule (2) höher ist als die Höhe der Schaumsammelsäule (3).

2. Vorrichtung (1) nach Anspruch 1, wobei die Füllstandsanzeige (5) entlang der Schaumsteigsäule (2), der Schaumsammelsäule (3) und der Leitung (4) vorgesehen ist.

3. Vorrichtung (1) nach einem der vorhergehenden Ansprüche, wobei die Füllstandsanzeige (5) aus Glas hergestellt ist.

4. Vorrichtung (1) nach einem der vorhergehenden Ansprüche, wobei eine Skala auf oder seitlich zu der Füllstandsanzeige (5) angeordnet ist.

5. Vorrichtung (1) nach einem der vorhergehenden Ansprüche, wobei die Schaumsteigsäule (2) fünf seitliche Schaumprobenahmepunkte (21, 22, 23, 24, 25) aufweist, die oberhalb des Lösungsmitteleinlasses (6) angeordnet sind.

6. Vorrichtung (1) nach einem der vorhergehenden Ansprüche, wobei eine Leitung (17) mit der Leitung (4) verbunden ist und zu dem Gaseinlass (7) führt.

7. Verfahren zum Überwachen einer Schaumbildung unter Verwendung der Vorrichtung nach Anspruch 1, umfassend die Schritte:
Zuführen eines Prozesslösungsmittels zu der Schaumsteigsäule (2) über den Lösungsmitteleinlass (6),
Zuführen eines Prozessgases zu der Schaumsteigsäule (2) über den Gaseinlass (7) und den Gasdiffusor (11), und
Überwachen der Höhe von jeglichem gebildeten Schaum über die Füllstandsanzeige (5).

## Revendications

1. Appareil (1) pour la surveillance de la formation de mousse, possédant une colonne de montée de mousse (2) et une colonne de recueil de mousse (3), dans lequel les extrémités supérieures de la colonne de montée de mousse (2) et de la colonne de recueil de mousse (3) sont en communication de fluide via une conduite (4), dans lequel la colonne de montée de mousse (2) possède une entrée de solvant (6) et une entrée de gaz (7) qui est située au-dessous de l'entrée de solvant (6) et qui est reliée à un diffuseur de gaz (11), dans lequel un indicateur transparent de niveau (5) est situé au moins le long de la colonne de montée de mousse (2), et dans lequel la conduite (4) est en forme de U,
**caractérisé en ce que**
la colonne de montée de mousse (2) possède au moins un point latéral d'échantillonnage de mousse (20) situé au-dessus de l'entrée de solvant, et
la colonne de montée de mousse (2) et la colonne de recueil de mousse (3) ont des hauteurs différentes, la hauteur de la colonne de montée de mousse (2) étant supérieure à la hauteur de la colonne de recueil de mousse (3).

2. L'appareil (1) selon la revendication 1, dans lequel l'indicateur de niveau (5) se situe le long de la colonne de montée de mousse (2), de la colonne de recueil de mousse (3) et de la conduite (4).

3. L'appareil (1) selon l'une des revendications précédentes, dans lequel l'indicateur de niveau (5) est en verre.

4. L'appareil (1) selon l'une des revendications précédentes, dans lequel une graduation est disposée sur ou à côté de l'indicateur de niveau (5).

5. L'appareil (1) selon l'une des revendications précédentes, dans lequel la colonne de montée de mousse (2) possède cinq points latéraux d'échantillonnage de mousse (21, 22, 23, 24, 25) situés au-dessus de l'entrée de solvant (6).

6. L'appareil (1) selon l'une des revendications précédentes, dans lequel une ligne (17) est reliée à la conduite (4) et aboutit à l'entrée de gaz (7).

7. Procédé de surveillance de la formation de mousse par utilisation de l'appareil de la revendication 1, comprenant les étapes suivantes :
amenée d'un solvant de traitement à la colonne de montée de mousse (2) via l'entrée de solvant (6),
amenée d'un gaz de traitement à la colonne de montée de mousse (2) via l'entrée de gaz (7) et le diffuseur de gaz (11), et
surveillance de la hauteur de toute mousse qui serait formée, via l'indicateur de niveau (5).
